# EUROPÄISCHE PATENTSCHRIFT

(11) **EP 1 961 478 B1**
(45) Veröffentlichungstag und Bekanntmachung des Hinweises auf die Patenterteilung: **01.05.2013**
(21) Anmeldenummer: 08009695.1
(22) Anmeldetag: 27.09.2005
(51) Int. Cl.: B01D 53/26, B01D 53/22, B01D 63/02, B01D 45/16, B01D 53/24

(54) **Trocknereinheit für Druckluft und andere gasförmige Medien**
Drying unit for compressed air and other gaseous media
Unité de séchoir pour air comprimé et autres milieux gazeux

(30) Priorität: 27.09.2004 DE 102004047216; 01.10.2004 DE 102004048438
(43) Veröffentlichungstag der Anmeldung: 27.08.2008
(62) Teilanmeldung aus: 05793030.7
(73) Patentinhaber: Beko Technologies GmbH, 41468 Neuss (DE)
(72) Erfinder: Deubler, Alfred, 71691 Freiberg (DE); Fischer, Valeriu, 74321 Bietigheim-Bissingen (DE); Schlensker, Herbert, 51381 Leverkusen (DE); Rambow, Jörg, 41464 Neuss (DE)
(74) Vertreter: Bauer Vorberg Kayser Patentanwälte

(56) Entgegenhaltungen:
- DE-A1-102004 022 312
- US-A- 6 019 822
- PATENT ABSTRACTS OF JAPAN Bd. 1998, Nr. 14, 31. Dezember 1998 (1998-12-31) & JP 10 235134 A (SMC CORP), 8. September 1998 (1998-09-08)

## Beschreibung

Die Erfindung betrifft eine Trocknereinheit für Druckluft und andere gasförmige Medien gemäß dem Oberbegriff des Anspruches 1.

Aus der US 6 019 822 A ist eine Trocknereinheit bekannt, die zum Trocknen gasförmiger Medien, insbesondere zum Einsatz auf Schiffen, bestimmt ist. Sie umfasst eine vertikale Trocknerpatrone mit Membranfaser und ein Gehäuse mit obenliegendem Auslass für getrocknete Luft und untenliegendem Einlass für Umgebungsluft. Dem Einlass der Trocknerpatrone ist ein Koaleszenzfilter vorgeschaltet, das sich in radialer Richtung erstreckt und dem unteren Abschnitt der Trocknerpatrone benachbart ist.

In der DE 10 2004 022 312 A1 ist eine Trocknereinheit beschrieben, die zum Trocknen der Verbrennungsgase einer Brennstoffzelle dient. Sie hat eine Membranfaser-Trocknerpatrone, die in einem Gehäuse angeordnet ist. Ein Einlass der Trocknereinheit ist mit dem Auslass der Brennstoffzelle verbunden, und die Verbrennungsluft für die Brennstoffzelle wird über einen Spülluftraum der Trocknereinheit zugeführt, der durch das Trocknergehäuse und die Membranfasern begrenzt ist.

Die JP 102 35 134 A zeigt ebenfalls eine Membranfaser-Trocknereinheit mit vertikal ausgerichtetem Membranfaserpaket.

Insbesondere beim Einsatz für medizinische und zahnmedizinische Zwecke wird trockene Druckluft benötigt. In entsprechenden Druckluftanlagen finden daher Trocknereinheiten Verwendung, die der am Ausgang eines Verdichters bereitgestellten Druckluft Feuchtigkeit entziehen.

Dabei sind unter anderem Trocknereinheiten bekannt, bei denen der komprimierten Luft das Wasser unter Verwendung von Membranen entzogen wird, die nur für Wasserdampf durchlässig sind. Diese nach dem Membranprinzip arbeitenden Trocknereinheiten arbeiten aber nur im kontinuierlichen Betrieb zufrieden stellend. Die dampfreiche Luft strömt durch die Hohlfaser-Membran, wobei die Dampfanteile durch die Faserwände hindurchtreten. Dieser ausgetretene Wasserdampf wird unter Verwendung eines Teilstromes der getrockneten Luft aus dem Gehäuse der Trocknereinheit ausgetragen, der von der am Ausgang der Trocknereinheit erhaltenen Luftmenge über eine Drosselstelle abgezweigt wird.

In der Anfahrphase werden große Feuchtigkeitsmengen eingetragen, es steht aber nicht ausreichend Spülluft zur Verfügung, da im System zunächst der Druck aufgebaut werden muss. Damit wird auch der Wasserdampf von der Außenseite der Membranfasern nicht ausreichend abgeführt. Dem Druckbehälter wird somit in der Anlaufphase der Anlage Luft mit hohem Wassergehalt (hoher Taupunkt) zugeführt.

Gerade die im medizinischen und zahnmedizinischen Bereich eingesetzten Drucklufterzeugereinheiten werden aber sehr ungleichmäßig beansprucht und daher häufig ein- und ausgeschaltet, so dass die oben angeführten Nachteile schwer wiegen.

Enthält Luft sehr hohe Feuchtigkeitsanteile, so ist es möglich, dass schon nach Passieren eines dem Auslass des Verdichters nachgeschalteten Kühlers in der Luft flüssige Anteile in Form feiner Tröpfchen oder Aerosole ausgeschieden werden. Typischerweise sind Membranfasern auf ihrer Innenseite mit einer besonderen Beschichtung versehen, die selektiv für Wassermoleküle durchlässig ist Diese Beschichtungen sind auf Grund ihrer Natur wasserlöslich. Kommen sie mit Wassertröpfchen oder Aerosol in Berührung, kann die Beschichtung Schaden nehmen, so dass die Trocknereinheit bleibend geschädigt wird.

Durch die Erfindung soll eine Trockenreinheit geschaffen werden bei der in der eintretenden Druckluft enthaltene Flüssigkeitsanteile, die schon kondensiert sind, zuverlässig und einfach aus der zugeführten Luft abgetrennt werden.

Diese Aufgabe ist erfindungsgemäß gelöst durch eine Trocknereinheit mit den im Anspruch 1 angegebenen Merkmalen.

Die erfindungsgemäße Durchströmungsrichtung des Koaleszenzfilters von innen nach außen ist im Hinblick auf günstige Führung der Luft und gutes Abtropfen von am Koaleszenzfilter gebildeten Tropfen von Vorteil.

Dabei bilden bei einer erfindungsgemäßen Trocknereinheit die eigentliche Trocknereinheit und das Koaleszenzfilter eine kompakte Einheit, was im Hinblick auf den Raumbedarf und im Hinblick auf das Vermeiden von Montagearbeiten vor Ort vorteilhaft ist. Trocknereinheit und Wasserabscheider sind vertikal angeordnet. Damit wird ein Ansammeln von Flüssigkeit vor der Membraneinheit vermieden. Eventuell entstehende Kondenswassertropfchen werden durch die Schwerkraft nach unten in einen Sammelsumpf abgeleitet.

Vorteilhafte Weiterbildungen der Erfindung sind in unteransprüchen angegeben.

Die Weiterbildung der Erfindung gemäß Anspruch 3 ist im Hinblick darauf vorteilhaft, dass im Koaleszenzfilter abgeschiedenes Wasser sich zu größeren Tropfen zusammenfindet, die sicher in einen Sumpf des Koaleszenzfilters fallen, ohne von durch den Koaleszenzfilter bewegter Luft nochmals mitgerissen zu werden.

Die Weiterbildung der Erfindung gemäß Anspruch 4 ist im Hinblick auf eine einfache Montage des Abtropfelementes von Vorteil.

Der im Anspruch 5 angegebene Aufbau des Gehäuses der Trocknereinheit ist im Hinblick auf einfache Wartung und einfachen Austausch des wirksamen Trocknermediums von Vorteil.

Dabei wird mit der Weiterbildung gemäß Anspruch 6 auf einfache Weise erreicht, dass die Patrone die wenig steifen Membranfasern sicher hält und die notwendigen Abdichtwände bei den beiden Kopfräumen erhalten werden.

Gemäß Anspruch 7 kann man das den Membranfasern Stabilität gebende Patronengehäuse zugleich als Begrenzung einer Spülluftkammer verwenden, welche die Membranfasern umgibt und durch welche die Spülluft hindurchgeführt wird.

Die Weiterbildung der Erfindung gemäß Anspruch 8 ist im Hinblick auf ein einfaches Anbringen von Dichtungen von Vorteil, mit denen die Patroneneinheit gegen das Gehäuse abgedichtet werden.

Die Weiterbildung der Erfindung gemäß Anspruch 9 ist einerseits im Hinblick auf ein fluchtendes Ausrichten der Segmente der mittleren Haupteinheit des Gehäuses von Vorteil. Außerdem erleichtert sie das Anbringen von Dichtringen zwischen Patroneneinheit und Gehäuse.

Bei einer Trocknereinheit gemäß Anspruch 10 kann eine der Verbindungsstellen der Segmente des Patronengehäuses zugleich einen ringförmigen Auslass-Schlitz für Spülluft darstellen. Mit sehr einfachen mechanischen Mitteln wird somit eine Gleichverteilung des Spülluftstromes im Membranfaserbündel erhalten.

Gemäß Anspruch 11 können die bei den Segmenten der mittleren Haupteinheit des Gehäuses vorgesehene Verbindungsringe zugleich Stützringe für Dichtringe bilden, mit denen die Patroneneinheit gegen das Gehäuse der Trocknereinheit abgedichtet ist.

Gemäß Anspruch 12 erhält man auf einfache Weise eine Verbindung zwischen dem Spüllufteingang der Patroneneinheit und einer mit dem Auslass-seitigen Kopfräum in Verbindung stehenden Drossel. Diese Strömungsverbindung wird automatisch hergestellt, wenn die verschiedenen Haupteinheiten des Gehäuses der Trocknereinheit zusammengefügt werden.

Auch die Weiterbildung der Erfindung gemäß Anspruch 13 dient einer gut gleichmäßigen Verteilung der Spülluft. Man erhält so eine bessere Ausnützung der Spülluft und eine höhere Ausbeute an nutzbarer getrockneter Luft.

Bei einer Trocknereinheit gemäß Anspruch 14 ist gewährleistet, dass im Inneren des Koaleszenzfilters keine Zyklonwirkung erhalten wird. Damit kann die in der Luft enthaltene Feuchtigkeit inklusive etwa vorhandener kleiner Tröpfchen durch das Filtermaterial hindurchwandern und wird auf der Außenseite des Koaleszenzfilters zusammengewachsen zu größeren Tropfen abgegeben und kann dort in einen Sammelbehälter geführt werden.

Mit der Weiterbildung der Erfindung gemäß Anspruch 15 ist gewährleistet, dass von der Luft mitgenommene Tröpfchen sich hinter dem Koaleszenzfilter unter Schwerkrafteinwirkung von der langsam bewegten Luft trennen und ebenfalls in den oben angesprochenen Sammelbehälter fallen.

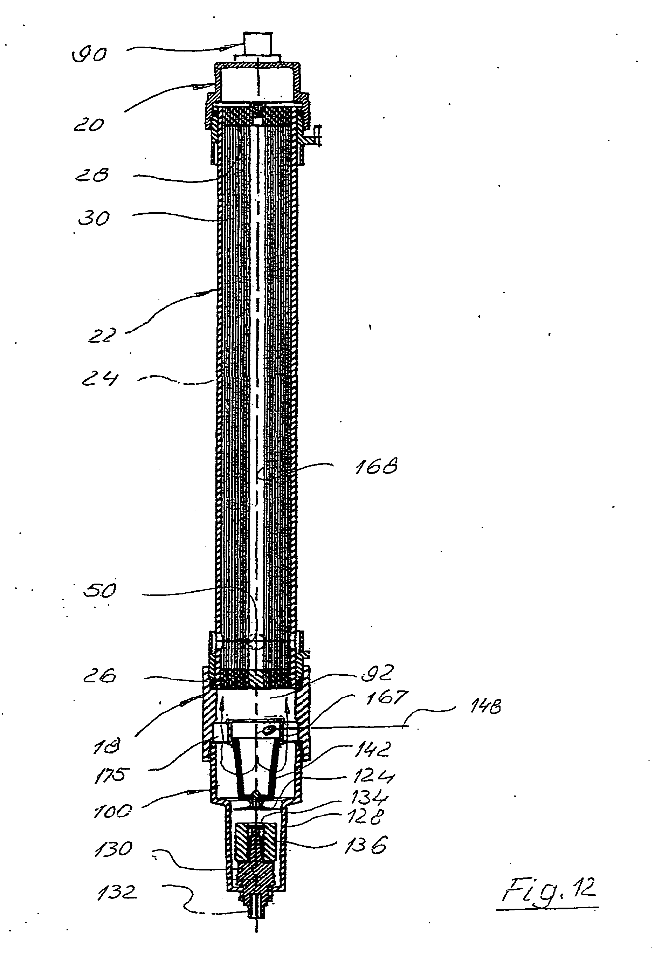

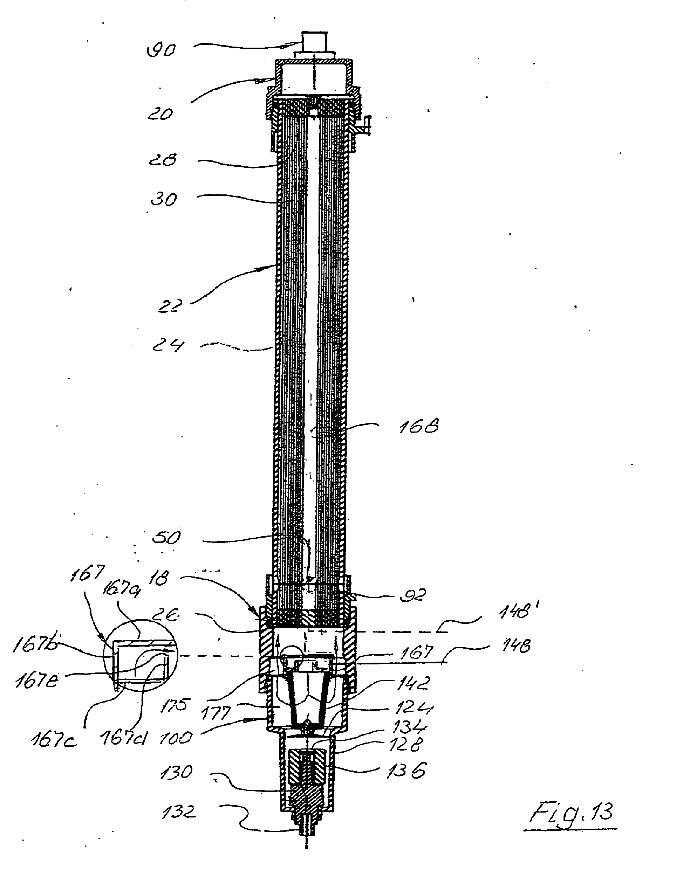

Nachstehend wird die Erfindung an Hand von Ausführungsbeispielen unter Bezugnahme auf die Zeichnung näher erläutert. Hierbei sind jedoch lediglich die Figuren 12 und 13 erfindungsgemäße Ausführungs formen. In dieser zeigen:
- Figur 1:: einen axialen Schnitt durch eine Druckluft-Trocknereinheit eingebaut in eine Druckluftanlage für eine Zahnarztpraxis;
- Figur 2:: einen weiteren axialen Schnitt durch die in Figur 1 gezeigte Trocknereinheit in einer zur Zeichenebene von Figur 1 senkrechten Ebene;
- Figur 3:: eine vergrößerte Darstellung eines unteren Kopfteiles der in Figur 1 gezeigten Trocknereinheit
- Figur 4:: eine vergrößerte Darstellung eines oberen Kopfteiles der in Figur 1 gezeigten Trocknereinheit;
- Figuren 5: und 6: ähnliche Ansichten wie Figur 4, in denen Varianten der Steuerung der Strömungsverbindung zwischen Trocknereinheit und einem nachgeschalteten Druckluft-Vorratsbehälter gezeigt sind;
- Figuren 7: und 8: ähnliche Darstellungen wie Figur 1, in welchen jedoch eine abgewandelte Trocknereinheit widergegeben ist;
- Figur 9:: eine vergrößerte Darstellung eines oberen Kopfteiles der in den Figuren 7 und 8 gezeigten Trocknereinheit;
- Figur 10:: eine ähnliche Ansicht wie Figur 9, in welcher eine weiter Variante des Kopfteiles gezeigt ist;
- Figur 11:: ein vergrößerte Ansicht eines unteren Kopfteiles der Trocknereinheit nach den Figuren 7 und 8;
- Figur 12:: eine ähnliche Ansicht wie Figur 7, wobei ein anderes Ausführungsbeispiel gezeigt ist, bei dem ein Koaleszenzfilter von außen nach innen durchströmt wird; und
- Figur 13:: eine ähnliche Ansicht wie Figur 12, wobei ein nochmals abgewandeltes Ausgführungsbeispiel gezeigt ist, bei welchem das Anströmen des Koaleszenzfilters rotationssymmetrisch erfolgt.

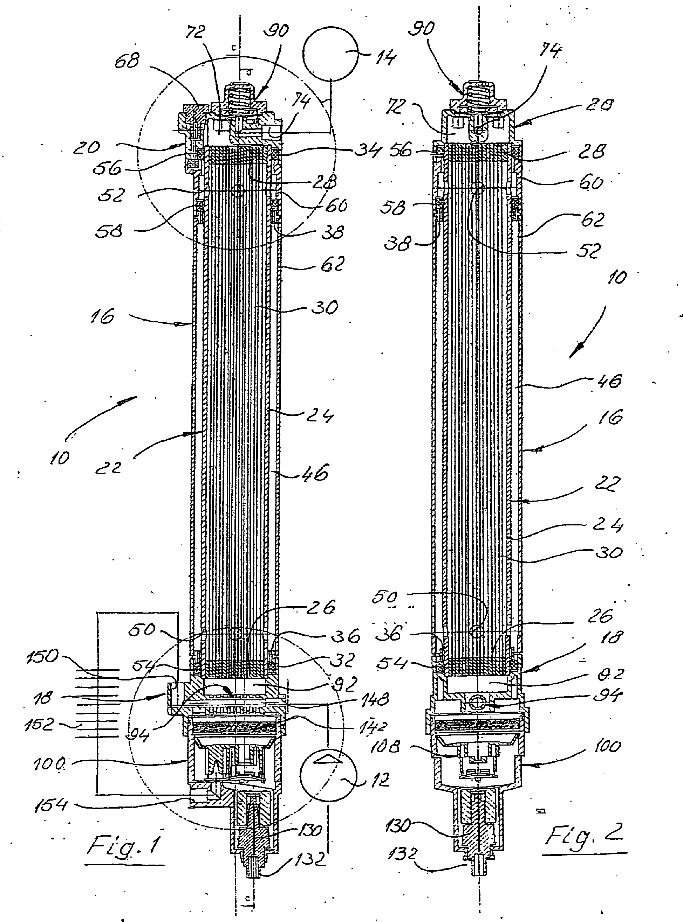

In den Figuren 1 bis 4 ist mit 10 insgesamt eine Trocknereinheit bezeichnet, die Luft von einem Verdichter 12 erhält und von Feuchtigkeit weitgehend befreite Druckluft an einen Druckluft-Vorratsbehälter 14 abgibt.

Die Trocknereinheit 10 umfasst ein zylindrisches Gehäuseteil 16, welches an seinen Enden durch ein unteres Kopfstück 18 bzw. ein oberes Kopfstück 20 verschlossen ist. Im Inneren des Gehäuseteiles 16 und in die Kopfstücke 18 und 20 mit seinen Enden hineinragend ist eine insgesamt mit 22 bezeichnete Trocknerpatrone angeordnet.

Diese umfasst ihrerseits eine zylindrische Patronenhülse 24, die an ihren Enden durch Halteplatten 26, 28 verschlossen ist. In die Halteplatten 26 und 28 sind die Enden einer großen Anzahl hohler Membranfasern 30 eingebettet, und zwar so, dass die Enden der Membranfaser offen sind.

Die Membranfasern können in der Praxis aus PES (Polyethersulfon) oder PEI (Polyetherimid) bestehen. Der Durchmesser der Membranfasern kann im Bereich von 100 bis 3000µm liegen, ihre Wandstärke bei 20 bis 1000 µm.

Damit das Wandmaterial der Membranfasern 30 eine starke spezifische Durchlässigkeit für Wasserdampf aufweist, ist die Innenseite der Membranfasern 30 mit einer Beschichtung versehen, die auf Grund ihrer Natur stark hydrophil ist. Damit ist sie aber auch wasserlöslich.

Die Trocknerpatrone 22 wird zum Beispiel so hergestellt, dass man die Membranfasern 30 zu einem entsprechenden Bündel zusammenlegt und die Halteplatten 26 und 28 durch Tränken zweier von den Enden des Membranfaserbündels nach innen beabstandeter Bereiche mit Harz herstellt. Die Membranfasern 30 werden dann bei den Enden der Halteplatten 26 und 28 abgeschnitten, so dass das Innere der Membranfasern frei zugänglich bleibt.

Die Kopfstücke 18 und 20 haben jeweils einen zylindrischen Schürzenabschnitt 32 bzw. 34, der zu dem zylindrischen Gehäuseteil 16 passt.

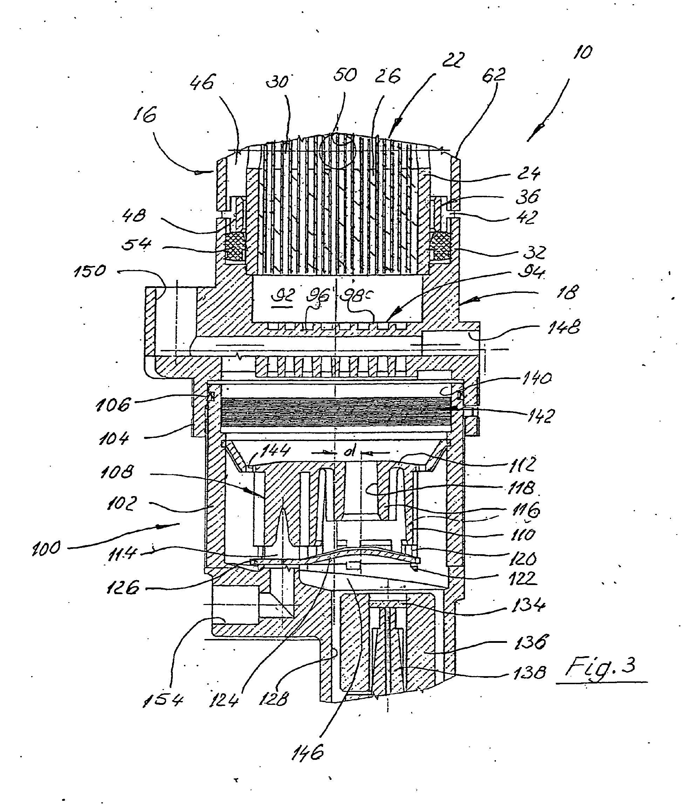

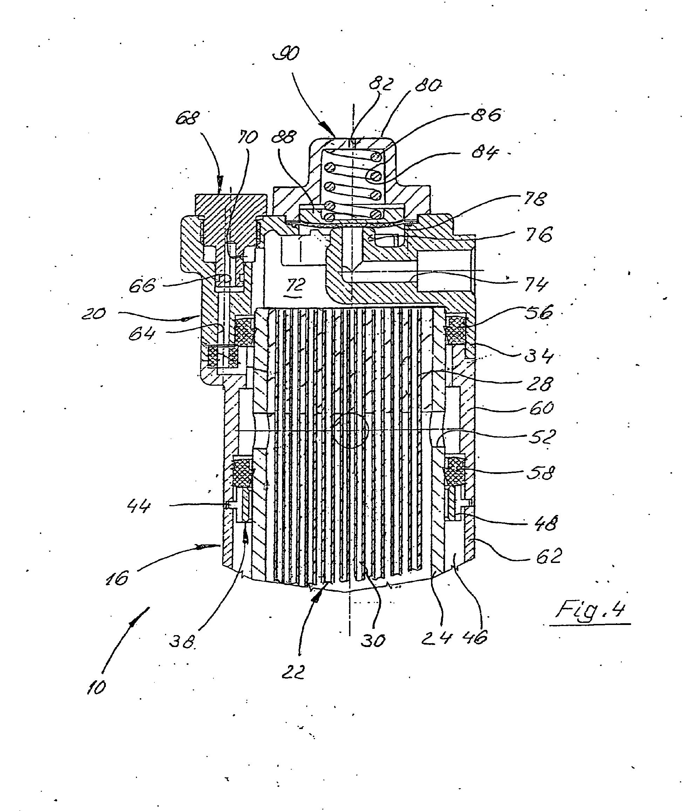

An den Stoßstellen zwischen dem Schürzenabschnitt 32 und dem zylindrischen Gehäuseteil 16 bzw. zwischen zwei Segmenten 60 und 62 des Gehäuseteiles 16 sind Verbindungsringe 36, 38 vorgesehen. Diese haben, wie insbesondere aus den Figuren 3 und 4 ersichtlich, T-förmigen transversalen Querschnitt und sitzen mit einem nach außen ragenden mittigen Flansch 42, 44 zwischen den gegenüberliegenden Stirnflächen von Schürzenabschnitt 32 und Gehäuseteil 16 bzw. den Segmenten 60, 62.

Wie aus der Zeichnung ersichtlich, hat die Patronenhülse 24 kleineren Durchmesser als das Gehäuseteil 16, so dass ein Ringraum 46 erhalten wird.

Wie aus Figur 3 ersichtlich, hat der Verbindungsring 36 nach außen offene Nuten 48, die in Umfangsrichtung verteilt sind. Auf diese Weise erhält man einen unteren Auslass-Schlitz für den Ringraum 46.

Der Ringraum 46 steht über vier im unteren Abschnitt der Patronenhülse 24 vorgesehene in Umfangsrichtung gleich verteilte Öffnungen 50 mit dem Inneren der Patronenhülse 24 in Verbindung. Ähnlich sind beim oberen Abschnitt der Patronenhülse 24 vier in Umfangsrichtung gleich verteilte Öffnungen 52 vorgesehen.

Die Trocknerpatrone 22 ist in dem durch die Kopfstücken 18, 20 und das Gehäuseteil 16 gebildeten Gehäuse unter Verwendung dreier Dichtringe gehalten. Ein unterer Dichtring 54 dichtet den Schürzenabschnitt 32 des Kopfstückes 18 gegen das untere Ende der Patronenhülse 24 ab.

Ein oberster Dichtring 56 dichtet in ähnlicher Weise das obere Ende der Patronenhülse 24 gegen das obere Kopfstück 20 ab. Wie aus der Zeichnung ersichtlich, liegen die Dichtringe 54, 56 axial jenseits der Öffnungen 50 und 52.

Ein zusätzlicher Dichtring 58 ist unterhalb der Öffnungen 52 vorgesehen und dichtet die Außenfläche der Patronenhülse 24 wieder gegen das Gehäuseteil 16 ab.

Um die Anbringung dieses Dichtringes zu ermöglichen, ist die Patronenhülse 24 etwas unterhalb des Dichtringes 58 gespalten, wobei an der Stoßstelle zwischen dem oberen Endsegment 60 und dem Hauptsegment 62 des Gehäuseteiles 16 der obere Verbindungsring 38 angeordnet ist.

Der zwischen den Dichtringen 56 und 58 liegende axiale Abschnitt des Ringraumes 46, der mit den Öffnungen 52 in Verbindung steht, steht über einen Kanal 64 und nicht näher mit Bezugszeichen versehene Durchgänge des Gehäuses und im oberen Kopfstück 20 mit einer Zentralbohrung 66 einer Düsenschraube 68 in Verbindung. Diese hat eine mit 70 bezeichnete Drosselbohrung, die mit einem oberen Kopfraum 72 im oberen Kopfstück 20 in Verbindung steht. Der Kopfraum 72 ist durch das Kopfstück 20 und die obere Halteplatte 28 begrenzt.

Im oberen Kopfstück 20 ist ferner ein abgewinkelter Auslasskanal 74 vorgesehen, welcher einen vertikal nach oben verlaufenden Rohrstutzen 76 umfasst. Der Rohrstutzen 76 bildet mit seiner oberen Stirnfläche einen Ventilsitz, der mit einer Ventilmembran 78 zusammenarbeitet. Letztere ist kreisförmig und koaxial zum Rohrstutzen 76 angeordnet.

Die Ventilmembran 78 ist zwischen der Oberseite des Kopfstückes 20 und einem Ventilgehäuse 80 eingespannt, welches durch nicht näher gezeigte Schrauben mit dem Kopfstück 20 verbunden ist.

Das Ventilgehäuse 80 ist mit einer über eine Entlüftungsöffnung 82 mit der Umgebung in Verbindung stehenden Federkammer 84 ausgebildet, welche eine Schraubenfeder 86 aufnimmt. Deren unteres Ende greift über einen abgerundeten Federsitz 88 an der Oberseite der Ventilmembran 78 an.

Die Stärke der Schraubenfeder 86 ist so gewählt, dass das die oben beschriebenen Komponenten 78 bis 88 umfassende Auslassventil 90 der Trocknereinheit bei einem Druck öffnet, bei welchem gewährleistet ist, dass über die Drosselbohrung 70 eine ausreichende Menge an Spülluft den oberen Öffnungen 52 der Patronenhülse 24 zugeführt wird. Die Spülluft strömt dann im Inneren der Patronenhülse 24 zwischen den Membranfäsern 30 nach unten, verlässt die Patronenhülse 24 unten durch die Öffnungen 50, und verlässt das Gehäuse der Trocknereinheit durch den ringförmigen Auslass-Schlitz beim unteren Verbindungsring 36.

Die untere Halteplatte 26 der Trocknerpatrone 22 begrenzt zusammen mit dem unteren Kopfstück 18 einen unteren Kopfraum 92. Dieser hat größere axiale Erstreckung als der obere Kopfraum 72, um dort einen transversalen, die Kopfraumachse schneidenden Wärmetauscher 94 anzuordnen. Der Wärmetauscher 94 umfasst ein zentrales horizontales Wärmetauscherrohr 96, auf welchem transversale, vertikal ausgerichtete Wärmetauscherrippen 98 sitzen.

Beim hier betrachteten Ausführungsbeispiel ist der Wärmetauscher 94 einstückig mit dem unteren Kopfstück 18. Es kann sich bei dem Wärmetauscher 94 aber auch um ein getrenntes Metallteil handeln, welches aus besonders gut wärmeleitendem Metall hergestellt ist.

Auf der Unterseite des unteren Kopfstückes 18 ist (vgl. inbsbesondere Figur 3) ein insgesamt mit 100 bezeichneter Zyklon angeordnet.

Dieser umfasst ein im Wesentlichen becherförmiges Gehäuse 102, welches mit seinem oberen Ende in eine herabhängende passende Schürze 104 des Kopfstückes 18 eingreift und über eine Dichtung 106 gegen diese abgedichtet ist.

In das Gehäuse 102 ist ein Zyklonteil 108 eingesetzt. Dieses hat eine in Umfangsrichtung verlaufende Zyklonwand 110 und eine obere Abschlusswand 112, die als flache kegelstumpfförmige Schale ausgebildet ist.

Die Achse der Zyklonwand 110 ist von der Achse der Trocknereinheit seitlich versetzt angeordnet, wie aus den Figuren ersichtlich. Der Achsabstand ist in der Zeichnung mit d bezeichnet.

Im unteren Abschnitt des Zyklonteils 108 ist ein abgewinkelter Einlasskanal 154 ausgebildet, der mit einem Einlass-Stutzen 114 des Zyklonteils 108 in Verbindung steht. Der durch den Einlass-Stutzen 114 vorgegebene Zyklon-Einlasskanal liegt im oberen Abschnitt in horizontaler Richtung um und mündet tangential in die Innenfläche der Zyklonwand 110.

Von der Abschlusswand 112 des Zyklonteils 108 hängt eine zylindrische Trennwand 116 nach unten, welche einen Auslasskanal 118 des Zyklonteils 108 begrenzt.

Am unteren Ende der Zyklonwand 110 sind mehrere in Umfangsrichtung verteilte elastische Haltefinger 120 vorgesehen, die an ihren unteren Enden mit nach innen weisenden Haltenasen 122 versehen sind.

Die Haltefinger 120 arbeiten mit dem Rand einer Abtropfscheibe 124 zusammen, die von oben gesehen konvex gekrümmt ist. Die Abtropfscheibe 124 hat an ihrem Rand vorspringende Zähne 126, mit denen sie in die zwischen den Haltefingern 120 liegenden Rücksprünge eingreift. Auf diese Weise ist die Abtropfnase 124 axial verschiebbar, jedoch verdrehsicher vom unteren Rand der Zyklonwand 110 gehalten. Das Anbringen der Abtropfscheibe 124 an dem Zyklonteil 108 kann einfach durch Aufrasten erfolgen.

In einem untersten Abschnitt des Zyklongehäuses 102 ist ein Sumpf 128 für abgeschiedene Flüssigkeiten vorgesehen. Dieser Sumpf steht über eine zapfenförmige ausgebildete Auslassarmatur 130 mit einem Auslass-Stutzen 132 in Verbindung. Die Auslassarmatur 130 hat einen zentralen Kanal, der in die verminderten Durchmesser aufweisende Stirnfläche der Auslassarmatur 130 ausmündet. Diese Ausmündungsstelle bildet einen Ventilsitz, mit welchem eine Ventilscheibe 134 zusammenarbeitet. Letztere ist von einem Schwimmer 136 getragen, der auf einem verminderten Durchmesser aufweisenden Führungsabschnitt 138 der Auslassarmatur 130 axial verschiebbar angeordnet ist.

In einem oberen Endabschnitt des Zyklongehäuses 102 ist eine Filterkammer 140 ausgebildet, in welcher ein Rückhaltefilter 142 für kleinste Flüssigkeitströpfchen und Aerosol angeordnet ist. Das Filtermaterial des Rückhaltefilters 142 ist ein hydrophobes Vliesmaterial oder ein hydrophobes Sintermaterial.

Flüssigkeitsanteile, die im Rückhaltefilter 142 zurückgehalten werden, tropfen vom Rückhaltefilter 142 nach unten und in die durch die Abschlusswand 112 gebildete Schale. Von dort gelangen sie im Boden der Schale vorgesehene Ablauföffnung 144 in den Ringraum, der zwischen der Außenfläche des Zyklonteils 108 und der Innenwand des Zyklongehäuses 102 liegt. Dort gelangt die abtropfende Flüssigkeit dann über eine schräge Bodenfläche 146 zum Sumpf 128. Wie aus der Zeichnung ersichtlich, wird bei der installierten Trocknereinheit ein Einlass 148, der mit dem Wärmetauscher 94 in Verbindung steht, mit dem Auslass des Verdichters 12 verbunden.

Ein Zwischenauslass 150 der Trocknereinheit, der mit dem Auslass des Wärmetauscher 94 in Verbindung steht, ist mit dem Eingang eines Lamellenkühlers 152 verbunden. Dessen Auslass ist mit dem Einlasskanal 154 des Zyklons 100 verbunden.

Die oben beschriebene Trocknereinheit arbeitet folgendermaßen:

Bei abgeschaltetem Verdichter 12 ist zunächst der Druckluft-Vorratsbehälter 14 vom Inneren der Trocknereinheit 10 getrennt, da der Innenraum der Trocknereinheit 10 druckfrei ist und unter diesen Bedingungen die Kraft der Schraubenfeder 86 ausreicht, die Ventilmembran 78 in fester Anlage an die Oberseite des Rohrstutzen 76 zu halten.

Wird der Verdichter 12 wieder eingeschaltet, so wird zunächst in der Trocknereinheit Druck aufgebaut. Mit dem Druckäufbau im oberen Kopfraum 20 beginnt dann schon Spülluft über die Drosselbohrung 70 und durch das Innere der Patronenhülse 24 zu strömen. Diese Spülluft nimmt zwischen den Membranfasern 30 befindliche Feuchtigkeit mit.

Erreicht der Druck im oberen Kopfraum 72 einen solchen Wert, dass durch die Gesamt-Druckbeaufschlagung der Ventilmembran 78 die Kraft der Schraubenfeder 86 überwunden wird, so wird eine Strömungsverbindung zwischen dem oberen Kopfraum 72 und dem Druckluft-Vorratsbehälter freigeschaltet. Ab diesem Zeitpunkt wird dann getrocknete Luft von der Trocknereinheit 10 an den Druckluft-Vorratsbehälter 14 abgegeben. Beim Strömen der Feuchtigkeit enthaltenden Luft durch die Membranfasern 30 treten dann die Wasserdampfanteile zu einem großen Teil durch die Faserwände hindurch, so dass die abgegebene Luft einen niederen Wassergehalt aufweist, also gut getrocknet ist.

Von der den oberen Kopfraum 72 erreichenden trockenen Luftmenge wird über die Drosselbohrung 70 ein vorgegebener Anteil abgespalten, und wie oben beschrieben dazu verwendet, die durch die Wände der Membranfasern 30 hindurchgetretenen Wasserdampfanteile aus der Patronenhülse 24 und aus der Trocknereinheit auszuspülen.

Die vom Verdichter 12 zugeführte Druckluft ist heiß (mehr als 100°C) und gibt einen Teil ihrer Wärme beim Durchströmen des Wärmetauschers 94 an die den unteren Kopfraum 92 durchströmende Druckluft ab. Etwaige restliche kondensierte Flüssigkeitsanteile, die hinter dem Zyklon 100 und hinter dem Rückhaltefilter 142 etwa noch in der Druckluft enthalten sind, werden durch die zugeführte Wärme in Dampfanteile umgewandelt. Es gelangen somit keine kondensierten Anteile in die Membranfasern 30, wo sie deren Beschichtung beschädigen könnten.

Die den Wärmetauscher 94 verlassende Luft wird im Lamellenkühler 152 abgekühlt. Die hierbei entstehenden Tröpfchen werden im Zyklon 100 abgetrennt. Etwa noch verbleibende sehr kleine Tröpfchen und Aerosol-Anteile werden im Rückhaltefilter 142 zurückgehalten. Damit ist die in die Membranfaser 30 unten eintretende_Luft schon gut vorgetrocknet.

Die Flüssigkeitsanteile, die im Rückhaltefilter 142 und dem Zyklon 100 abgeschieden werden, gelangen in den Sumpf 128 und werden durch die Schwimmer-betätigte Ventilscheibe 134 in Abständen automatisch abgelassen.

Alternativ kann der Schwimmer 136 einen Kontakt betätigen, durch den ein Magnetventil oder ein pneumatisch betätigtes Ventil gesteuert wird.

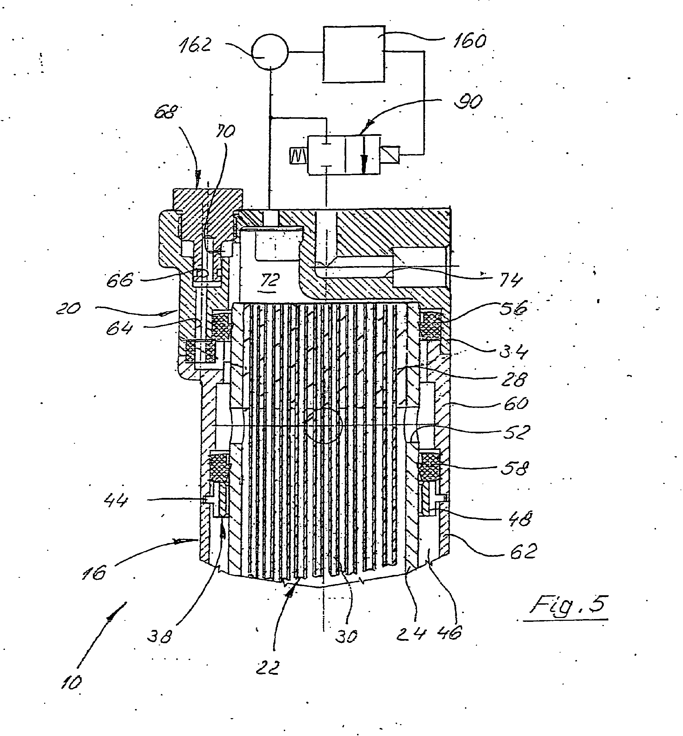

Beim Ausführungsbeispiel nach Figur 5 ist das Auslassventil 90 als Magnetventil ausgebildet. Die Ansteuerung dieses Magnetventiles erfolgt nun über eine Steuerschaltung 160, die in Abhängigkeit vom Ausgangssignal eines Druckfühlers 162 arbeitet, der mit dem oberen Kopfraum 72 kommuniziert.

Vorzugsweise arbeitet die Steuerschaltung 160 so, dass sie das Auslassventil 90 im Impulsbetrieb betreibt. Dabei kann die Steuerschaltung 160 so arbeiten, dass sie das Auslassventil 90 vollständig geschlossen hält, bis der Druck im Auslass-seitigen Kopfraum 72 einen vorgegebenen Wert erreicht, der zur Erzeugung eines ausreichenden Spülluftstromes genügt. Mit Erreichen dieses vorgegebenen Druckwertes arbeitet die Steuerschaltung 160 dann so, dass sie in einer Übergangsphase das Tastverhältnis zwischen Offenzeit und Schließzeit des Auslassventiles 90 progressiv erhöht, bis im Auslass-seitigen Kopfraum 72 der für stationäres Arbeiten der Trocknereinheit gewünschte Druck erreicht ist. Ab diesem Zeitpunkt bleibt dann das Tastverhältnis unverändert. Alternativ kann man ab diesem Zeitpunkt das Auslassventil 90 in bleibende Offenstellung steuern.

In Abwandlung kann man den Druckfühler 162 auch weglassen und die Steuerung des Verhältnisses zwischen Offenzeit und Schließzeit in Abhängigkeit von der seit Einschalten der Anlage verstrichenen Zeit vornehmen.

In nochmaliger Abwandlung kann man anstelle des Druckfühlers 162 einen Feuchtigkeitsfühler verwenden, der im Strom der über den Verbindungsring 36 abgegebenen verbrauchten Spülluft liegt.

In nochmaliger Abwandlung kann auch die obigen Steuerungsmöglichkeiten alle oder teilweise kombinieren.

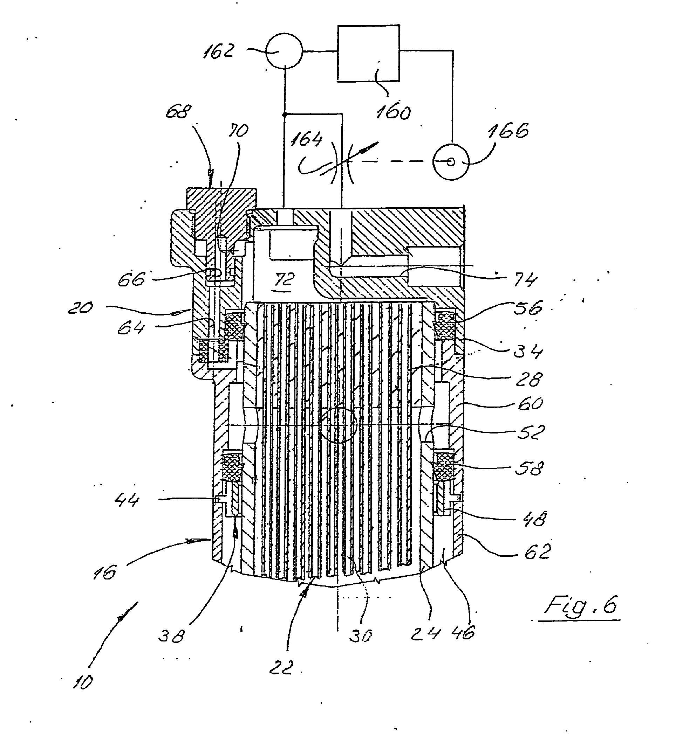

Bei der Ausführungsform nach Figur 6 ist anstelle des Auslassventiles 90 eine einstellbare Drossel 164 vorgesehen, deren Durchströmquerschnitt durch einen Stellmotor 166 eingestellt wird. Bei diesem Ausführungsbeispiel wird der Stellmotor 166 durch eine abgewandelte Steuerschaltung 160 aktiviert, die wieder mit einem mit dem oberen Kopfraum 72 in Verbindung stehenden Druckfühler 162 zusammenarbeitet.

Ist der Druck im oberen Kopfraum 72 in der Anlaufphase der Trocknereinheit 10 zunächst klein, so stellt die Steuerschaltung 160 die Drossel 164 in ihre stärkste Drosselstellung. Damit kann sich der Druck im oberen Kopfraum 72 wieder rasch auf den gewünschten Mindestdruck aufbauen, der für die Gewährleistung der Spülluftversorgung notwendig ist. Ab diesem Zeitpunkt kann die Steuerschaltung 160 dann die Drossel 164 zunehmend öffnen, so dass dann zunehmend trockene Luft in den Druckluft-Vorratsbehälter 14 abgegeben wird.

Es versteht sich, dass man eine einstellbare Drossel auch dadurch realisieren kann, dass man eine Mehrzahl parallel geschalteter Festdrosseln verwendet, die über Magnetventile freigegeben werden.

Alternativ kann die Steuerung der Spülluftmenge durch ein Proportionalventil erfolgen.

Dabei stehen jeweils wieder die drei oben geschilderten Möglichkeiten der Steuerung nach dem Druck im Auslaß, auf Zeitbasis und nach dem Feuchtigkeitsgehalt der abgegebenen Spülluft einzeln und in Kombination zur Verfügung.

Abgesehen von der abgewandelten Art der Steuerung der Strömungsverbindung zwischen Trocknereinheit 10 und Druckluft-Vorratsbehälter 14 arbeiten die Ausführungsbeispiele nach den Figuren 5 und 6 ähnlich wie die nach den Figuren 1 bis 4.

Bei den Kopfstücken 18 und 20 sowie beim Zyklongehäuse 102 und dem Zyklonteil 108 handelt es sich vorzugsweise um Spritzteile aus Metall oder Kunststoff bzw. faserverstärktem Kunststoff. Das zylindrische Gehäuseteil 16 kann ein Abschnitt aus einem extrudierten Metall- oder Kunststoffprofil sein, welche soweit notwendig, mechanisch nachbearbeitet ist.

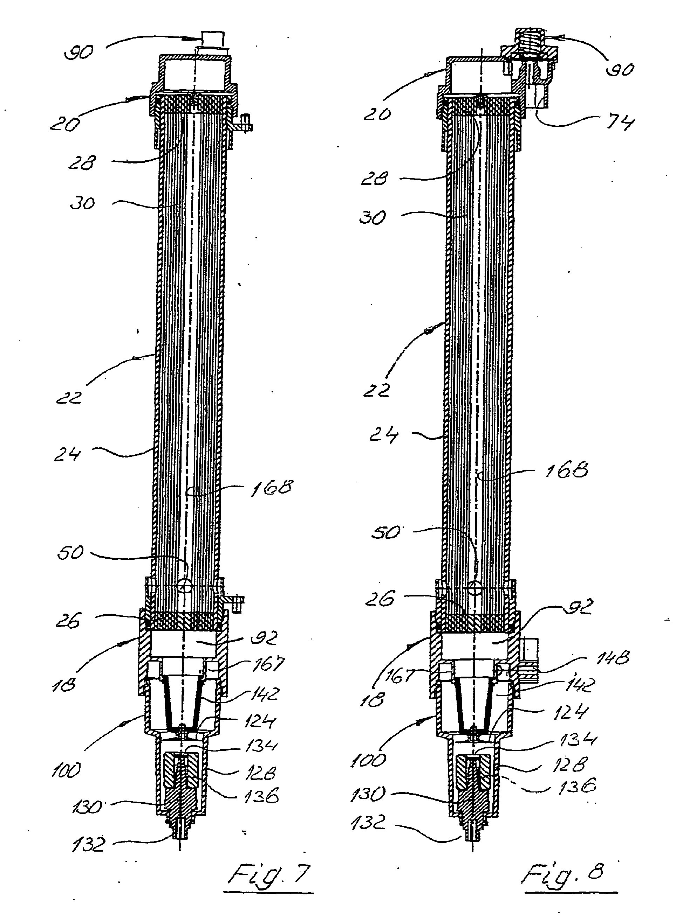

In den weitere Ausführungsformen zeigenden Figuren 7 bis 11 sind Komponenten, die obenstehend schon angesprochenenen von der Funktion her entsprechen, wieder mit denselben Bezugszeichen versehen, auch wenn sie sich in Einzelheiten unterscheiden. Diese Komponenten werden nachstehend nicht nochmals detailliert beschrieben.

Bei den Ausführungsbeispielen nach den Figuren 7 bis 11 ist das Gehäuseteil 16 entfallen. Die Patronenhülse 24 stellt zugleich die fluidische Trennung zur Ümgebungsatmoshäre sicher.

Das Rückhaltefilter 142 ist als aus hydrophobem Sintermaterial hergestelltes Koaleszenzfilter ausgebildet und hat die Gestalt eines an einem Tragring 167 des Kopfstückes 18 hängenden unten verschlossenen Kegelstumpfes. Die untere Deckwand des Kegelstumpfes trägt die Abtropfscheibe 124.

Der Einlaß 148 mündet tangential in den Zyklon 100 ein. Die Luft wird so durch Zentrifugieren von Tröpfchen befreit, bevor sie von außen nach innen das Rückhaltefilter 142 durchströmt und in den unteren Kopfraum 92 gelangt.

Die Einspeisung der Spülluft erfolgt zentral über den in der Mitte der Halteplatte 28 vorgesehenen Kanal 62.

Auch ist ein zentraler Kernraum 168 der Patrone 22 frei von Membranfasern 30, um die unteren Bereiche der Membranfasern ausreichend mit frischer Spülluft zu versorgen.

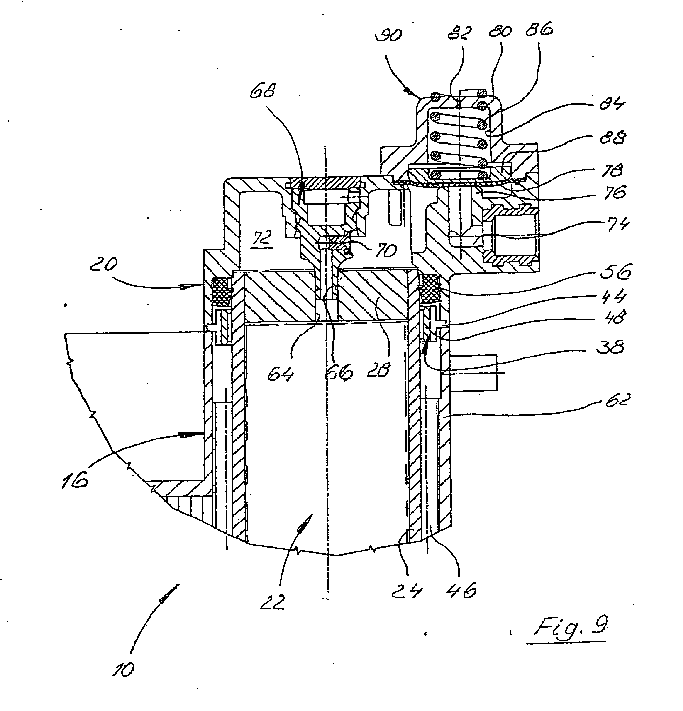

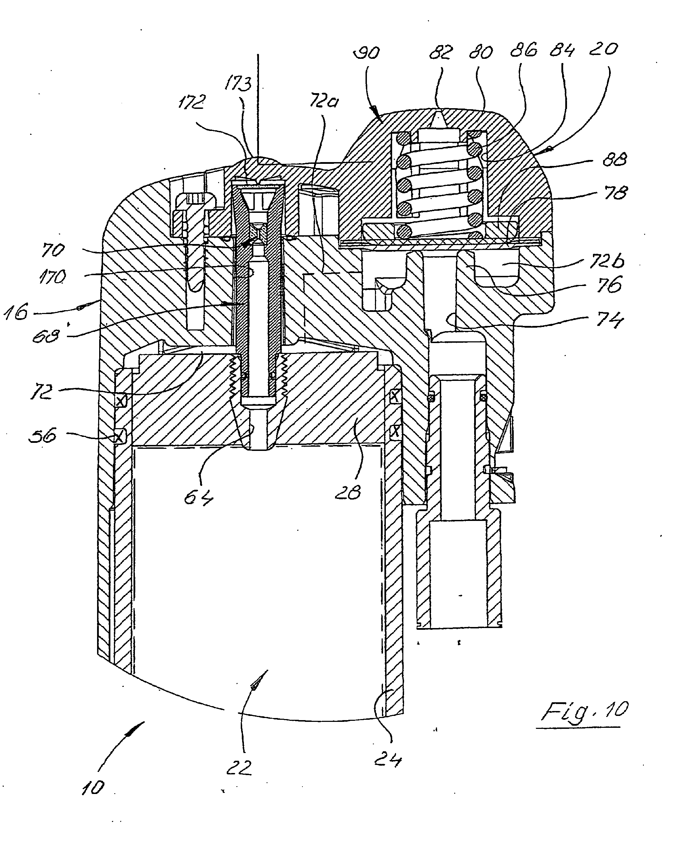

Das Kopfstück 20 nach Figur 10 hat eine andere, kleinere Trennfläche zum Gehäuseteil 16, ist von der Funktion her aber dem Kopfstück nach Figur 9 vergleichbar.

Der obere Kopfraum 72 ist bei ihm über einen Gehäusekanal 72a mit einem Einlaßraum 72b des Auslassventiles 90 verbunden. Die Spülluftzufuhr zur Drossel 70 erfolgt über einen Spalt, der zwischen einer das Düsenteil 68 aufnehmenden Bohrung 170 und der Außenfläche des Düsenteiles 68 liegt und zur hinteren Stirnfläche des Düsenteiles 68 führt. Diese trägt eine poröse Signalscheibe 172.

Diese wird auf Grund ihrer Anordnung von Luft umspült, die aus dem oberen Kopfraum 72 stammt und als Spülluft über die Drossel 70 zur Innsenseite des Membranfaser-Paketes geleitet wird. Die Signalscheibe ist aus einem Material gefertigt, dessen Aussehen sich in Abhängigkeit vom Feuchtigkeitsgehalt der durch sie strömenden Luft ändert, wobei ein Farbwechsel bevorzugt ist.

Änderungen in der Struktur der Oberfläche oder Änderungen in der Geometrie der Signalscheibe wären aber auch geeignet.

In das aus transparentem Material gefertigte Kopfteil 20 ist eine Linse 173 eingearbeitet, welche eine klare und deutliche Beurteilung der Farbe der Signalscheibe auch aus Abstand ermöglicht.

Ferner ist der Auslaßkanal 74 parallel zur Achse der Patrone 22 ausgerichtet, was für manche Anwendungen eine radial kompaktere Gesamtanordnung aus Trocknereinheit und Leitungsanschlüssen ermöglicht.

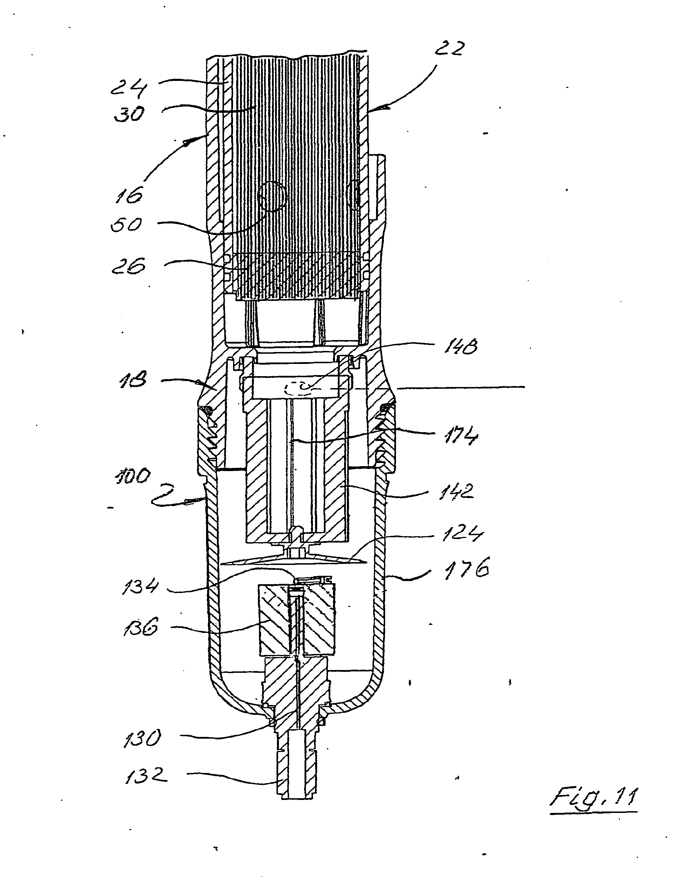

Beim Ausführungsbeispiel nach Figur 11 ist das Rückhaltefilter 142 zylindrisch mit innenliegenden axialen Verstärkungsrippen 174. Ein unterstes Gehäuseteil 176 ist zu Wartungszwecken abschraubbar.

In weiterer Abwandlung kann man das untere Ende des Gehäuses der Trocknereinheit so ausbilden, daß das Rückhaltefilter 142 von innen nach außen durchströmt wird.

Eine solche Trocknereinheit ist in Figur 12 gezeigt. Schon besprochene Komponenten sind wieder mit denselben Bezugszeichen versehen und werden nicht nocheinmal beschrieben.

Der Tragring 167 für das aus hydrophobem Sintermaterial gefertigte Rückhaltefilter 142 ist an seinem oberen Ende verschlossen, und der Einlaß 148 mündet tangential in der Umfangswand des Tragringes 167 aus. Der Tragring 167 ist nun über sternförmig verteilte Haltearme 175 am Kopfstück 18 aufgehängt. Auf diese Weise kann das Rückhaltefilter 142 von innen nach außen durchströmt werden, wie durch Pfeile angedeutet.

Beim Ausführungsbeispiel nach Figur 13 ist dafür Sorge getragen, daß im Inneren des Koaleszenzfilters 142 keine Drehbewegung (Drall) der anströmenden Luft erhalten wird. Hierzu erfolgt das Einspeisen der Luft rotationssymmetrisch.

Um dies zu erreichen ist der Tragring 167 als rotationssymmetrisches Kastenteil ausgebildet. Er hat eine obere Endwand 167a, eine äußere Umfangswand 167b und eine ringförmige Bodenwand 167c, von der eine innere Umfangswand 167d wieder nach oben zurückläuft. Sie endet unter kurzem Abstand unter der Endwand 167a, und bildet somit mit der letzteren einen ringförmigen Speisespalt 167e.

Die über den Einlass 148 zugeführte zu behandelnde Luft strömt somit als rotationssymmetrischer Vorhang in radialer Einwärtsrichtung und geht in einen rotationssymmetrischen axialen Luftstrom über, wie schematisch dargestellt. Man hat also im Inneren des Koaleszenzfilters keine Zyklonwirkung.

Zur Verbindung mit dem Koaleszenzfilter 142 weist der Tragring 167 eine Schürze 167e auf.

Statt der Ausbildung des Tragringes 167 als Kastenprofil kann man die Zuführung des Luft in den Tragring 167 auch axial durchführen, wie in Figur 13 bei 148' dargestellt.

Obenstehend wurde die Erfindung am Beispiel der Trocknung von Druckluft erläutert. Es versteht sich, dass die Erfindung gleichermaßen auf die Trennung anderer Gasgemische unter Verwendung von Hohlfaser-Membranen anwendbar ist.

## Patentansprüche

1. Trocknereinheit für Druckluft und andere gasförmige Medien, mit einem Gehäuse (16, 18, 20), welches einen Einlass (148) für zu trocknende Luft und einen Auslass (74) für getrocknete Luft ausweist, mit einer Tauschereinheit (22), welche eine Vielzahl von hohlen Membranfasern (30) aufweist, deren Enden offen in zwei Halteplatten (26, 28) festgelegt sind, welche zusammen mit dem Gehäuse (16, 18, 20) einen Einlass-seitigen Kopfraum (92) und einen Auslass-seitigen Kopfraum (72), der über ein Auslassventil (90) oder eine Auslassdrossel (164) mit dem Auslass In Verbindung steht, begrenzen, wobei ein mit den Außenflächen der Membranfasern (30) in Verbindung stehender Spülluftraum einen Spüllufteinlass (50) und einen Spülluftauslass (52) aufweist und mit einem Teil der getrockneten Luft beaufschlagt ist, **dadurch gekennzeichnet, dass** dem Einlass-seitigen Kopfraum (92) ein Koaleszenzfilter (142) vorgeschaltet ist, welches von innen nach außen durchströmt ist, und das Koaleszenzfilter (142) auf dem unteren Ende des vertikal ausgerichteten Gehäuses (16, 18, 20) angeordnet Ist.

2. Trocknereinheit nach Anspruch 1, **dadurch gekennzeichnet, dass** die Tauschereinheit einen zentralen, von Membranfaserns (30) freien Kernraum (168) aufweist, der axial auf das Koaleszenzfilter (142) zuläuft.

3. Trocknereinheit nach Anspruch 1 oder 2, **dadurch gekennzeichnet, dass** am unteren Ende des Koaleszenzfilters (142) ein radial nach außen abfallendes Abtropfelement (124) vorgesehen ist.

4. Trocknereinheit nach Anspruch 3, **dadurch gekennzeichnet, dass** das Abtropfelement (124) auf das untere Ende des Koaleszenzfilters (142) aufgesetzt ist, vorzugsweise vertikal verschiebbar dort gehalten wird.

5. Trocknereinheit nach einem der Ansprüche 1 bis 4, **dadurch gekennzeichnet, dass** das Gehäuse (16, 18, 20) aus drei Haupteinheiten besteht: einem Einlass-seitigen Kopfstück (18), einem Auslass-seitigen Kopfstück (20) und einem dazwischen liegenden gestreckten Gehäuseteil (16), welches eine Trocknerpatrone (92) umgibt, die die Anordnung von Membranfasern (30) und die Membranfaser-Halteplatten (26, 28) umfasst.

6. Trocknereinheit nach Anspruch 5, **dadurch gekennzeichnet, dass** die Trocknerpatrone (22) ein hülsenförmiges Patronengehäuse (24) aufweist, an dessen Enden die beiden Halteplatten (26, 28) dicht angebracht sind.

7. Trocknereinheit nach Anspruch 6, **dadurch gekennzeichnet, dass** das hülsenförmige Patronengehäuse (24) zwei axial beabstandete, vorzugsweise den Patronenenden benachbarte Spülluftöffnungen (50, 52) aufweist, welche vorzugsweise jeweils als Sätze in Umfangsrichtung verteilter Öffnungen ausgebildet sind.

8. Trocknereinheit nach einem der Ansprüche 5 bis 7, **dadurch gekennzeichnet, dass** die Kopfstücke (18, 20) und das mittlere Gehäuseteil (16) lösbar miteinander verbunden sind.

9. Trocknereinheit nach Anspruch 8, **dadurch gekennzeichnet, dass** an den Stoßstellen zwischen den Kopfstücken (18, 20) und dem mittleren Gehäuseteil (16) bzw. Segmenten (60, 62) des mittleren Gehäuseteiles (60) Verbindungsringe (36, 38) vorgesehen sind.

10. Trocknereinheit nach Anspruch 9, **dadurch gekennzeichnet, dass** mindestens einer der Verbindungsringe (35, 38) einen Durchtritt zur Außenseite des Gehäuses (14, 16, 18) bildet, vorzugsweise eine Vielzahl in Umfangsrichtung gleich verteilter Durchtrittsöffnungen (48) aufweist.

11. Trocknereinheit nach Anspruch 9 oder 10, **dadurch gekennzeichnet, dass** mindestens einer der Verbindungsringe (36,38) zugleich einen Stützring für einen Dichtring (54, 58) darstellt, über den die Trocknerpatrone (22) gegen das Gehäuse (16, 18, 20) abgedichtet ist.

12. Trocknereinheit nach Anspruch 11, **dadurch gekennzeichnet, dass** das Auslass-seitige Ende der Trocknerpatrone (22) durch zwei beabstandete Dichtringe (56, 58) gegen das Gehäuse (16, 18, 20) abgedichtet ist und der axial zwischen den beiden Dichtringen (56, 58) liegende Raum über eine Drossel (70) mit dem Auslassseitigen Kopfraum (72) verbunden ist.

13. Trocknereinheit nach einem der Ansprüche 1 bis 12, **dadurch gekennzeichnet, dass** der Spüllufteinlaß (50) einen zentralen Spülluft-Speisekanal (64) oder einen ringförmigen Spülluft-Speisekanal umfaßt.

14. Trocknereinheit nach einem der Ansprüche 1 bis 13, **dadurch gekennzeichnet, dass** ein Tragring (157) vorgesehen sind, welcher die zu behandelnde Luft im wesentlichen rotationssymmetrisch auf das rotationssymmetrische Koaleszenzfilter (142) leitet.

15. Trocknereinheit nach einem der Ansprüche 1 bis 14, **dadurch gekennzeichnet, dass** eine auf der Ausgangsseite des Koaleszenzfilters (142) liegende Kammer (177) so gestaltet ist, dass in ihr die Strömungsgeschwindigkeit der Luft herabgesetzt ist.

16. Trocknereinheit nach Anspruch 14 oder 15, **dadurch gekennzeichnet, dass** die Zuführung der Luft zu den Leitmitteln (167) axial erfolgt.

17. Trocknereinheit nach einem der Ansprüche 16, **dadurch gekennzeichnet, dass** das Koaleszenzfilter (142) die Gestalt eines konischen Bechers hat.

## Claims

1. A dryer unit for compressed air and other gaseous media, with a housing (16, 18, 20) having an inlet (148) for air to be dried and an outlet (74) for dried air, with an exchanger unit (22) having a plurality of hollow membrane fibres (30) whose ends which are fixed, open, in two holding plates (26, 28) which, together with the housing (16, 18, 20), delimit an inlet-side head space (92) and an outlet-side head space (72) connected to the outlet via an outlet valve (90) or an outlet throttle (164), wherein a purging air space connected to the outer surfaces of the membrane fibres (30) has a purging air inlet (50) and a purging air outlet (52) and is charged with a portion of the dried air, **characterised In that** a coalescence filter (142), through which there is a flow from the inside towards the outside, is connected upstream of the inlet-side head space (92), and the coalescence filter (142) is arranged on the lower end of the vertically oriented housing (16, 18, 20).

2. The dryer unit according to claim 1, **characterised in that** the exchanger unit has a central core space (168) which is free from membrane fibres (30) and axially extends towards the coalescence filter (142).

3. The dryer unit according to claim 1 or 2, **characterised in that** a drip element (124) that slopes radially outwards is provided at the lower end of the coalescence filter (142).

4. The dryer unit according to claim 3, **characterised in that** the drip element (124) is placed on the lower end of the coalescence filter (142), preferably held there in a vertically displaceable manner.

5. The dryer unit according to any one of the claims 1 to 4, **characterised in that** the housing (16, 18, 20) consists of three main units: an inlet-side head piece (18), an outlet-side head piece (20) and an elongated housing part (16) situated therebetween, which surrounds a dryer cartridge (92) comprising the assembly of membrane fibres (30) and the membrane fibres holding plates (26, 28).

6. The dryer unit according to claim 5, **characterised in that** the dryer cartridge (22) has a sleeve-shaped cartridge housing (24), to whose ends the two holding plates (26, 28) are attached in tight manner.

7. The dryer unit according to claim 6, **characterised in that** the sleeve-shaped cartridge housing (24) has two axially spaced purging air openings (50, 52) which are preferably adjacent to the cartridge ends, and which are in each case preferably formed as sets of openings distributed in the circumferential direction.

8. The dryer unit according to any one of the claims 5 to 7, **characterised in that** the head pieces (18, 20) and the middle housing part (16) are detachably connected to one another.

9. The dryer unit according to claim 8, **characterised in that** connecting rings (36, 38) are provided at the joints between the head pieces (18, 20) and the middle housing part (16) or segments (60, 62) of the middle housing part (60).

10. The dryer unit according to claim 9, **characterised in that** at least one of the connecting rings (35, 38) forms a passage to the outside of the housing (14, 16, 18), preferably has a plurality of passage openings (48) distributed evenly in the circumferential direction.

11. The dryer unit according to claim 9 or 10, **characterised in that** at least one of the connecting rings (36, 38) simultaneously constitutes a supporting ring for a sealing ring (54, 58), via which the dryer cartridge (22) is sealed off from the housing (16, 18, 20).

12. The dryer unit according to claim 11, **characterised in that** the outlet-side end of the dryer cartridge (22) is sealed off from the housing (16, 18, 20) by two spaced sealing rings (56, 58) and the space situated axially between the two sealing rings (56, 58) is connected to the outlet-side head space (72) via a throttle (70).

13. The dryer unit according to any one of the claims 1 to 12, **characterised in that** the purging air inlet (50) comprises a central purging air feed channel (64) or an annular purging air feed channel.

14. The dryer unit according to any one of the claims 1 to 13, **characterised in that** a ring support (157) is provided which conducts the air to be treated in a substantially rotationally symmetrical manner onto the rotationally symmetrical coalescence filter (142).

15. The dryer unit according to any one of the claims 1 to 14, **characterised in that** a chamber (177) situated on the exit side of the coalescence filter (142) is configured in such a way that the flow rate of the air is reduced in it.

16. The dryer unit according to claim 14 or 15, **characterised in that** the air is supplied towards the conducting means (167) in the axial direction.

17. The dryer unit according to any one of the claims 16, **characterised in that** the coalescence filter (142) has the shape of a conical cup.

## Revendications

1. Unité de séchoir pour air comprimé et autres milieux gazeux, comprenant un carter (16, 18, 20) qui présente une entrée (148) pour l'air à sécher et une sortie (74) pour l'air séché, une unité d'échangeur (22) qui présente une pluralité de fibres membranaires creuses (30) dont les extrémités sont fixées de manière ouverte dans deux plaques de maintien (26, 28) qui délimitent, conjointement avec ledit carter (16, 18, 20), un espace de tête (92) côté entrée et un espace de tête (72) côté sortie qui est en communication avec la sortie via une soupape d'échappement (90) ou un dispositif d'étranglement de sortie (164), un espace d'air de balayage qui est en communication avec les surfaces extérieures des fibres membranaires (30) présentant une entrée d'air de balayage (50) et une sortie d'air de balayage (52) et étant soumis à une partie de l'air séché, **caractérisée par le fait qu'**un filtre de coalescence (142) est monté en amont dudit espace de tête (92) côté entrée, qui est traversé de l'intérieur vers l'extérieur et que ledit filtre de coalescence (142) est disposé sur l'extrémité inférieure du carter (16, 18, 20) agencé verticalement.

2. Unité de séchoir selon la revendication 1, **caractérisée par le fait que** ladite unité d'échangeur présente un espace de coeur (168) central qui est exempt de fibres membranaires (30) et qui s'étend axialement en direction dudit filtre de coalescence (142).

3. Unité de séchoir selon la revendication 1 ou 2, **caractérisée par le fait qu'**à l'extrémité inférieure du filtre de coalescence (142) est prévu un élément d'égouttage (124) allant en pente radialement vers l'extérieur.

4. Unité de séchoir selon la revendication 3, **caractérisée par le fait que** ledit élément d'égouttage (124) est rapporté sur l'extrémité inférieure du filtre de coalescence (142), de préférence y est maintenu de manière à être verticalement déplaçable.

5. Unité de séchoir selon l'une quelconque des revendications 1 à 4, **caractérisée par le fait que** ledit carter (16, 18, 20) se compose de trois unités principales : d'une partie de tête (18) côté entrée, d'une partie de tête (20) côté sortie et d'une partie de carter (16) allongée située entre ceux-ci qui entoure une cartouche de séchoir (92) qui comprend l'ensemble de fibres membranaires (30) et les plaques de maintien de fibres membranaires (26, 28).

6. Unité de séchoir selon la revendication 5, **caractérisée par le fait que** ladite cartouche de séchoir (22) présente un boîtier de cartouche (24) en forme de douille aux extrémités duquel les deux plaques de maintien (26, 28) sont montées à étanchéité.

7. Unité de séchoir selon la revendication 6, **caractérisée par le fait que** ledit boîtier de cartouche (24) en forme de douille présente deux ouvertures d'air de balayage (50, 52) espacées axialement qui, de préférence, sont voisines des extrémités de la cartouche et qui, de préférence, sont réalisées chacune en tant que jeux d'ouvertures réparties dans la direction circonférentielle.

8. Unité de séchoir selon l'une quelconque des revendications 5 à 7, **caractérisée par le fait que** lesdites parties de tête (18, 20) et ladite partie centrale de carter (16) sont reliées entre elles de manière amovible.

9. Unité de séchoir selon la revendication 8, **caractérisée par le fait que** des anneaux de liaison (36, 38) sont prévus sur les joints entre les parties de tête (18, 20) et la partie centrale de carter (16) ou bien les segments (60, 62) de la partie centrale de carter (60).

10. Unité de séchoir selon la revendication 9, **caractérisée par le fait que** l'un au moins des anneaux de liaison (36, 38) forme un passage vers la face extérieure du carter (16, 18, 20), de préférence présente une pluralité d'ouvertures de passage (48) réparties uniformément dans la direction circonférentielle.

11. Unité de séchoir selon la revendication 9 ou 10, **caractérisée par le fait que** l'un au moins des anneaux de liaison (36, 38) constitue en même temps un anneau d'appui pour un anneau d'étanchéité (54, 58) par le biais duquel la cartouche de séchoir (22) est rendue étanche par rapport au carter (16, 18, 20).

12. Unité de séchoir selon la revendication 11, **caractérisée par le fait que** l'extrémité côté sortie de ladite cartouche de séchoir (22) est étanchée par le biais de deux anneaux d'étanchéité espacés (56, 58) par rapport au carter (16, 18, 20) et que l'espace situé axialement entre les deux anneaux d'étanchéité (56, 58) est relié via un dispositif d'étranglement (70) à l'espace de tête (72) côté sortie.

13. Unité de séchoir selon l'une quelconque des revendications 1 à 12, **caractérisée par le fait que** ladite entrée d'air de balayage (50) comprend un canal central d'alimentation en air de balayage (64) ou un canal annulaire d'alimentation en air de balayage.

14. Unité de séchoir selon l'une quelconque des revendications 1 à 13, **caractérisée par le fait qu'**une bague porteuse (157) est prévue qui dirige l'air à traiter pour l'essentiel avec une symétrie de révolution sur ledit filtre de coalescence (142) à symétrie de révolution.

15. Unité de séchoir selon l'une quelconque des revendications 1 à 14, **caractérisée par le fait qu'**une chambre (177) située du côté de sortie du filtre de coalescence (142) est conformée de manière à ce que la vitesse d'écoulement de l'air soit réduite à l'intérieur de celle-ci.

16. Unité de séchoir selon la revendication 14 ou 15, **caractérisée par le fait que** l'amenée de l'air aux moyens de guidage (167) se fait de manière axiale.

17. Unité de séchoir selon la revendication 16, **caractérisée par le fait que** ledit filtre de coalescence (142) présente la forme d'un godet conique.
